# EUROPEAN PATENT APPLICATION

(11) **EP 4 576 620 A1**
(43) Date of publication of application: **25.06.2025**
(21) Application number: 24216888.8
(22) Date of filing: 02.12.2024
(51) Int. Cl.: H04J 3/06, G06F 1/12, H04L 67/12

(54) **RELAY DEVICE, COMMUNICATION NETWORK SYSTEM, RELAY METHOD, AND COMPUTER PROGRAM**

(30) Priority: 22.12.2023 JP 2023216958
(71) Applicant: DENSO CORPORATION, Kariya-city, Aichi-pref., 448-8661 (JP)
(72) Inventor: TAJIMA, Takeshi, Minato-ku, Tokyo, 108-0075 (JP)
(74) Representative: Winter, Brandl - Partnerschaft mbB

(57) **Abstract**

A relay device relaying communication between a plurality of masters (1, 2) and a plurality of slaves (3, 4) via a communication network (6) is provided. The relay device includes a time synchronization support unit (11) configured to set a lower communication priority for a time synchronization communication frame transmitted from a master when a clock accuracy required for a function of the master is relatively low.

## Description

The present disclosure relates to a device for relaying communication between multiple masters and multiple slaves via a communication network, a communication network system including the device, a relay method, and a computer program.

The time synchronization provided in TSN (Time Sensitive Network), a type of Ethernet (registered trademark) used for in-vehicle communications, is designed with a target accuracy of less than 1 microsecond.

Non-patent literature 1: Time-Sensitive Network (TSN) Implementation Guide, Published by Information & Communication System Solution, Toyo Technica Co.

On the other hand, devices connected to in-vehicle communication networks include those related to autonomous driving and infotainment systems, among others. The required time synchronization accuracy for communication varies depending on the function of these devices. However, technologies in a related art have not specifically addressed how to control communication based on the time synchronization accuracy required by each device.

The present disclosure provides a relay device capable of appropriately setting the priority of communication based on the clock accuracy required according to the function of each master, a communication network system including the device, a relay method, and a computer program.

According to one aspect of the present disclosure, a relay device relaying communication between a plurality of masters and a plurality of slaves via a communication network is provided. The relay device includes a time synchronization support unit configured to set a communication priority for a time synchronization communication frame transmitted from a master. Each of the plurality of masters has a clock accuracy required for a function of the master. The time synchronization support unit sets a lower communication priority for a time synchronization frame transmitted from a first master when the clock accuracy required for a function of the first master is lower than the clock accuracy required for a function of a second master.

Objects, features and advantages of the present disclosure will become more apparent from the following detailed description made with reference to the accompanying drawings. In the drawings:
FIG. 1 is a functional block diagram illustrating a configuration of an in-vehicle communication system according to a first embodiment;
FIG. 2 is a diagram illustrating the in-vehicle communication system shown in FIG. 1 in a configuration closer to an actual situation;
FIG. 3 is a flowchart illustrating processes executed mainly by a time synchronization support unit of a relay device;
FIG. 4 is a flowchart illustrating the process content of step S7 shown in FIG. 3;
FIG. 5 is a diagram illustrating each field of an announcement message;
FIG. 6 is a diagram illustrating an Ethernet frame format; and
FIG. 7 is a flowchart illustrating processes executed mainly by a time synchronization support unit of a relay device according to a second embodiment.

### (First Embodiment)

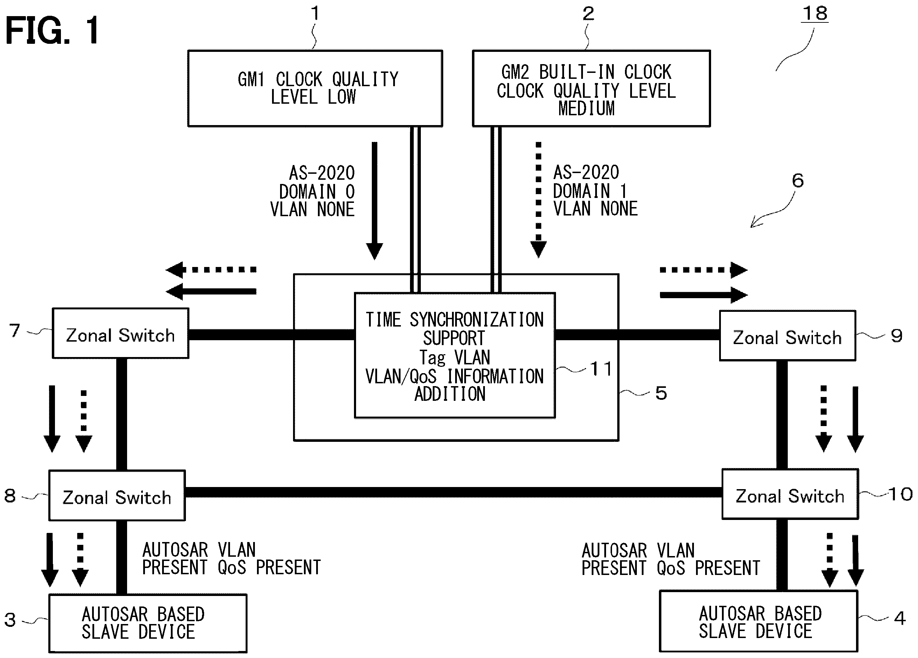

As shown in FIG. 1, in the in-vehicle communication system of the present embodiment, for example, two masters GM 1 and GM 2 and, for example, two slaves 3 and 4 are connected via a communication network 6 including a relay device 5 and communicate with each other. Ethernet (registered trademark) is adopted for the communication network. The GMs 1 and 2 and the slaves 3 and 4 are all electronic control units (ECUs) mounted on a vehicle. The communication network 6 includes the relay device 5, switches 7 and 8 arranged between the relay device 5 and the slave 3, and switches 9 and 10 arranged between the relay device 5 and the slave 4. A GM is an abbreviation for a global master.

The switches 7, 8, 9, and 10 are arranged in four regions of the vehicle: front, rear, left, and right, respectively, and transfer communication between ECUs arranged in each region. The switches 7, 8, 9, and 10 may be zone ECUs. As shown in FIG. 1, the relay device 5 and the switches 7, 8, 9, and 10 are connected in a ring shape, forming a ring topology. However, the topology is not limited to a ring shape and may be other network topologies such as a mesh type.

The GMs 1 and 2 comply with the communication protocol IEEE 802.1AS-2020. Furthermore, the GMs 1 and 2 do not comply with IEEE 802.1q, that is, they do not support the VLAN (Virtual Local Area Network) function. VLAN is a technology for dividing one physical switch into multiple virtual switches. The slaves 3 and 4 comply with the communication protocol AUTOSAR (AUTomotive Open System ARchitecture), that is, IEEE 802.1AS-2011. AUTOSAR is the specification name of a platform for achieving standardization of in-vehicle software.

The slaves 3 and 4 comply with IEEE 802.1q, that is, the slaves 3 and 4 support the VLAN function. Furthermore, the slaves 3 and 4 also support the QoS (Quality of Service) method, which classifies and groups application data and communicates according to the priority of each group, that is, the slaves 3 and 4comply with IEEE 802.1p.

The relay device 5 complies with the communication protocol IEEE 802.1AS-2020. The relay device 5 also complies with the communication protocol AUTOSAR, that is, IEEE 802.1AS-2011. Furthermore, the relay device 5 complies with IEEE 802.1q and IEEE 802.1p, that is, the relay device 5 supports the VLAN function and the QoS method.

The switches 7, 8, 9, and 10 comply with the communication protocol IEEE 802.1AS-2020. The switches 7, 8, 9, and 10 also comply with the communication protocol AUTOSAR, that is, IEEE 802.1AS-2011. Furthermore, the switches 7, 8, 9, and 10 comply with IEEE 802.1q and IEEE 802.1p, that is, the switches 7, 8, 9, and 10 support the VLAN function and the QoS method. Note that the GMs 1 and 2 do not comply with IEEE 802.1p.

The data transmitted from the GMs 1 and 2 is transferred to the slaves 3 and 4 via the communication lines, the relay device 5, and the switches 7, 8, 9, and 10. Specifically, in FIG. 1, the data transmitted from the GMs 1 and 2 is transferred to the slave 3 via the relay device 5 and the switches 7 and 8. Additionally, the data transmitted from the GMs 1 and 2 is transferred to the slave 4 via the relay device 5 and the switches 9 and 10. The data transmitted from the GMs 1 and 2 may also be transferred to the slaves 3 and 4 via the communication lines, the relay device 5, and the switches 7, 8, and 10, for example. In other words, the data may be transferred without passing through the switch 9.

The relay device 5 includes a controller and a memory, neither of which are shown, and the controller includes a time synchronization support unit 11. The time synchronization support unit 11 adds information related to the priority corresponding to the QoS to the time synchronization communication frame included in the above data and transfers it to the slaves 3 and 4 via the switches 7, 8, 9, and 10. Hereinafter, the time synchronization communication frame may be simply referred to as a communication frame.

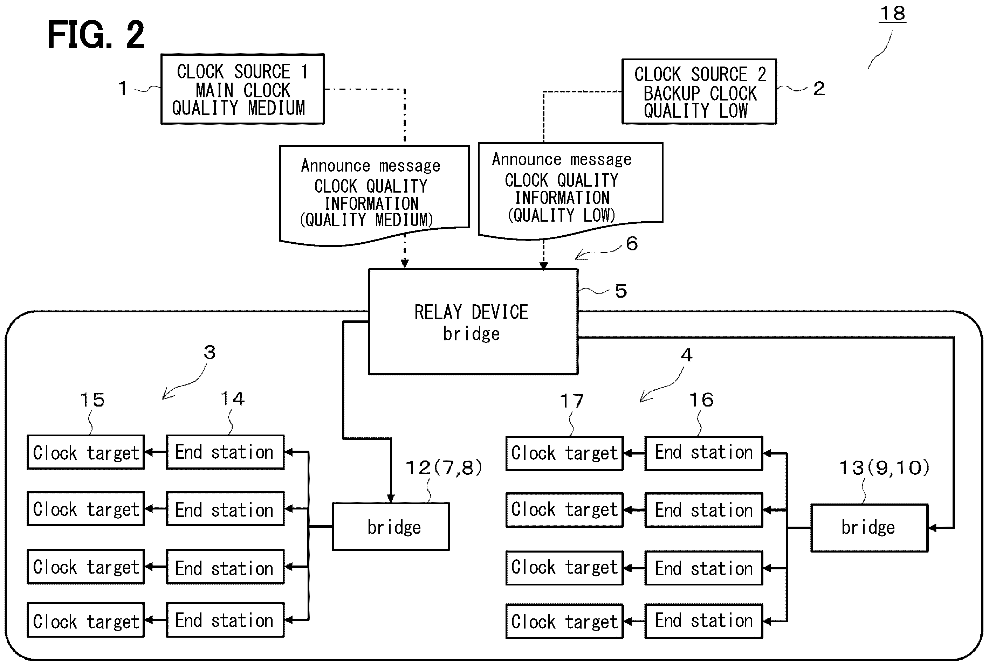

FIG. 2 shows a system configuration closer to an actual use case. The GM 1 is, for example, a primary clock source 1, and the required time accuracy, that is, the clock quality as clock accuracy, is "medium." In other words, the GM 1 is, for example, the main clock source 1. The GM 2 is, for example, a backup clock source 2, and the clock quality is "low." The switches 7 and 8, and the switches 9 and 10 are collectively shown as one bridge 12 and 13, respectively. Although not shown in FIG. 2, there may be communication lines connecting the bridge 12 and the bridge 13.

The slave 3 includes an end station 14, which is a communication node, and a clock target 15 that operates according to the clock supplied by the GM 1 or 2. Similarly, the slave 4 includes an end station 16 and a clock target 17. Each of the slaves 3 and 4 includes one or more end stations 14 and 16. The clock target 15 is provided to correspond to each end station 14 and 16. The above constitutes an in-vehicle communication system 18, which is the communication network system.

This system configuration is a multiplexed network that operates the primary and backup clock sources simultaneously. When the GM 1, which has a higher clock quality than the GM 2, is operating normally, it is not necessary to prioritize the transmission of the backup GM 2. In other words, when the GM 1, which has a higher clock quality than the GM 2, is operating normally, it is not necessary to increase the transmission priority of the GM 2, which has a lower clock quality than the GM 1. That is, it may be desirable that the data transmission of the backup GM 2 does not interfere with the data transmission of the primary GM 1.

Therefore, the relay device 5 dynamically sets parameters of a clock quality of the primary and backup clocks from the announcement message included in the communication data. The parameters correspond to, for example, the combination of the clock quality and the MAC (Media Access Control) addresses of the transmitting devices. Based on these parameters, the relay device 5 determines the QoS value, which is the transmission priority. If the primary clock is lost, the transmission priority, which was once lowered, is restored as described later.

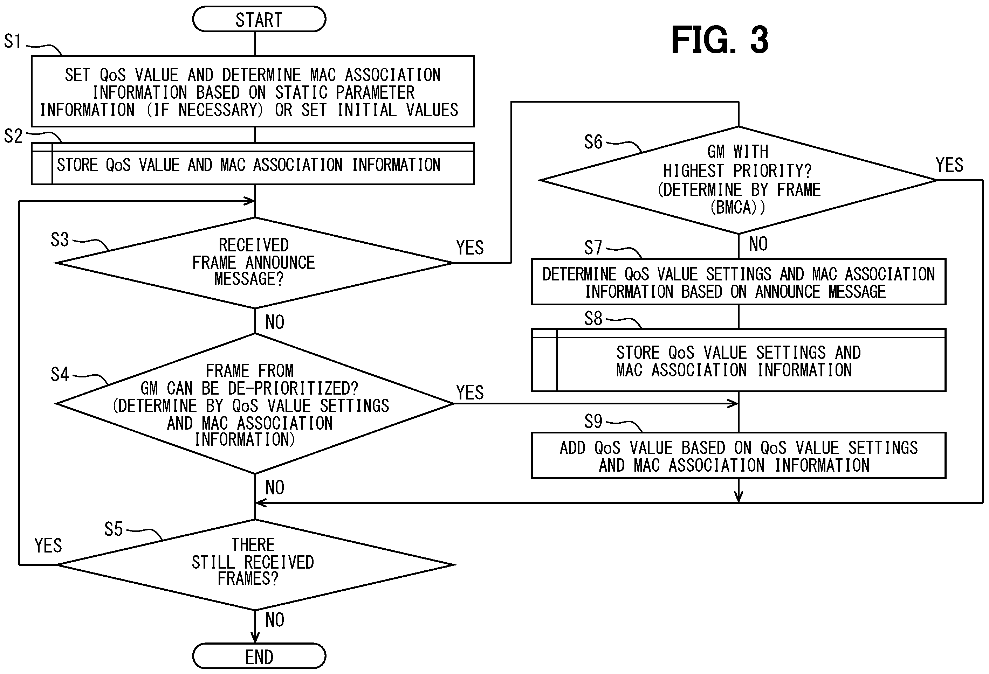

Next, the operation of the present embodiment will be described. As shown in FIG. 3, if QoS value settings and MAC association information, which is a combination of MAC addresses, are prepared in advance as static parameter information, the time synchronization support unit 11 of the relay device 5 determines QoS value settings and MAC association information based on them. The static parameter information refers to information where the QoS value settings and the MAC association information are predefined as a system. If there is no static parameter information, initial values are set (S1). Then, the determined QoS value and MAC association information, or the initial values, are stored in a storage medium such as memory (S2). The determination of the QoS value settings and the MAC association information in step S1 can be performed as needed, and only the setting of the initial values may be performed instead. In other words, regardless of the presence or absence of static parameter information, only the setting of the initial values may be performed.

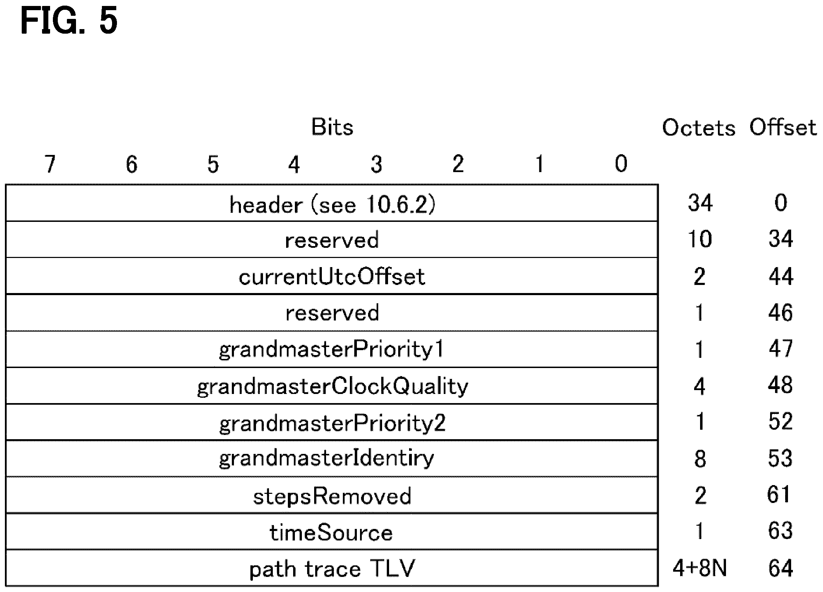

Subsequently, it is determined whether the communication frame received from GM 1 or 2 is an announcement message (S3). The announcement message shown in FIG. 5 is specified as Table 10-11-Announce message fields in 10.6.3.1 General Announce message specifications of the standard IEEE Std 802.1AS (registered trademark) - 2020. If the received communication frame is an announcement message (Yes), it is determined whether the transmitting GM has the highest transmission priority (S6). For example, it may be determined whether the transmitting GM has the highest transmission priority by arbitration called BMCA (Best Master Clock Algorithm).

If the transmitting GM has the highest transmission priority (S6; Yes), it is determined whether there are still received frames (S5). If there are still received frames (Yes), the process returns to step S3. If there are no more received frames (No), the process ends. On the other hand, if the transmitting GM does not have the highest transmission priority (S6; No), the QoS value settings and the MAC association information are determined based on the announcement message (S7), and the QoS value settings and the MAC association information are stored in a storage medium such as memory, as in step S2 (S8). Then, the QoS value based on the QoS value settings and the MAC association information is added to the frame (S9), and the process proceeds to step S5.

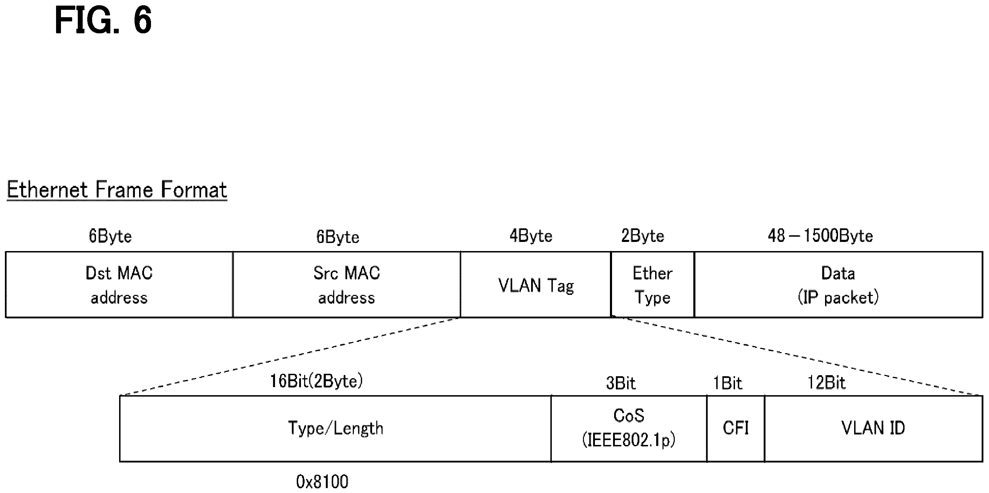

The addition of the QoS value is performed by setting an 8-level priority from the lowest "0" to the highest "7" in the 3-bit CoS (Class of Service) field within the 4-byte VLAN tag area in the Ethernet frame format, as shown in FIG. 6. For example, if "1" is the default setting among the priorities "0" to "7", it may be set so that the priority "1" corresponds to the 3 bits "000". The priority "0" may correspond to "001", "2" to "010", "3" to "011", "4" to "100", "5" to "101", "6" to "110", and "7" to "111".

In step S3, if the received communication frame is not an announcement message (No), it is determined whether the frame is from a GM whose transmission priority can be lowered, based on the QoS value and MAC association information stored in step S2 (S4). If the frame is from a GM whose transmission priority can be lowered (Yes), the process proceeds to step S9.

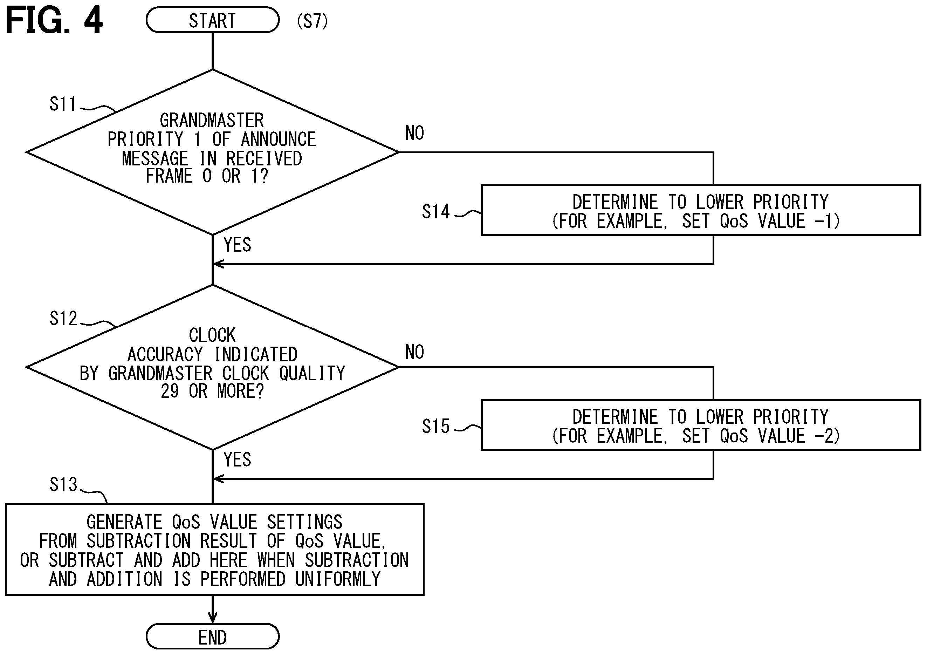

As shown in FIG. 4, in the process of step S7, first, it is determined whether the grandmasterPriority1 setting in the announcement message of the received communication frame is 0 or 1 (S11). If the grandmasterPriority1 setting is 0 or 1 (Yes), it is determined whether the clockAccuracy indicated by the grandmasterClockQuality setting in the announcement message is, for example, 29 or higher (S12). If the grandmasterPriority1 setting is not 0 or 1 in step S11 (No), it is determined that the GM is one whose transmission priority can be lowered, and the CoS value set in the CoS field is subtracted by, for example, "1" from the value set at that time (S14). In other words, the transmission priority set in the CoS field is lowered by one level. Then, the process proceeds to step S12.

In step S12, if the clockAccuracy indicated by the grandmasterClockQuality setting in the announcement message is not 29 or higher (No), it is determined that the GM is one whose transmission priority can be lowered, similar to step S14, and the CoS value is subtracted by, for example, "2" from the value set at that time (S15). In other words, the transmission priority set in the CoS field is lowered by two levels. Then, the process proceeds to step S13, where the QoS value is set based on the result of the CoS value subtraction. If the CoS value is uniformly added or subtracted, it is done here. Which of the priorities "0" to "6" other than the highest "7" is set depends on the system. If it is determined as "Yes" in step S12, the CoS value is not subtracted, so the CoS value and the QoS value remain as the initial values.

As described above, according to the present embodiment, the relay device 5 relays communication between the GMs 1 and 2 and the slaves 3 and 4 via the communication network 6. At that time, the time synchronization support unit 11 sets a lower communication priority for the time synchronization communication frame transmitted from the GM 1 or 2 if the clock accuracy required for the function of the GM 1 or 2 is relatively low. As a result, even if the clock accuracy required for the functions of the GM 1 or 2 is different, the time synchronization support unit 11 appropriately sets the priority to avoid conflicts, ensuring that communication from the GM with relatively high clock accuracy is prioritized.

More specifically, the time synchronization support unit 11 determines the transmission priority based on the grandmasterPriority1 and grandmasterClockQuality included in the announcement message within the time synchronization communication frame when the protocol of the communication network 6 complies with IEEE 802.1p. In the communication protocol IEEE 802.1p, the grandmasterPriority1 in the announcement message is a field that directly specifies the priority of the GM, and the grandmasterClockQuality is a field that sets the relative clock quality of the GM, and the clockAccuracy within the grandmasterClockQuality is related to the relative clock accuracy. Therefore, the time synchronization support unit 11 can reasonably set the communication priority based on the information stored in these fields.

Furthermore, the time synchronization support unit 11 sets the priority in the CoS field within the time synchronization communication frame. In the Ethernet frame format, a 3-bit CoS field is set to determine the communication priority, so the priority can be set using the pre-allocated field.

### (Second Embodiment)

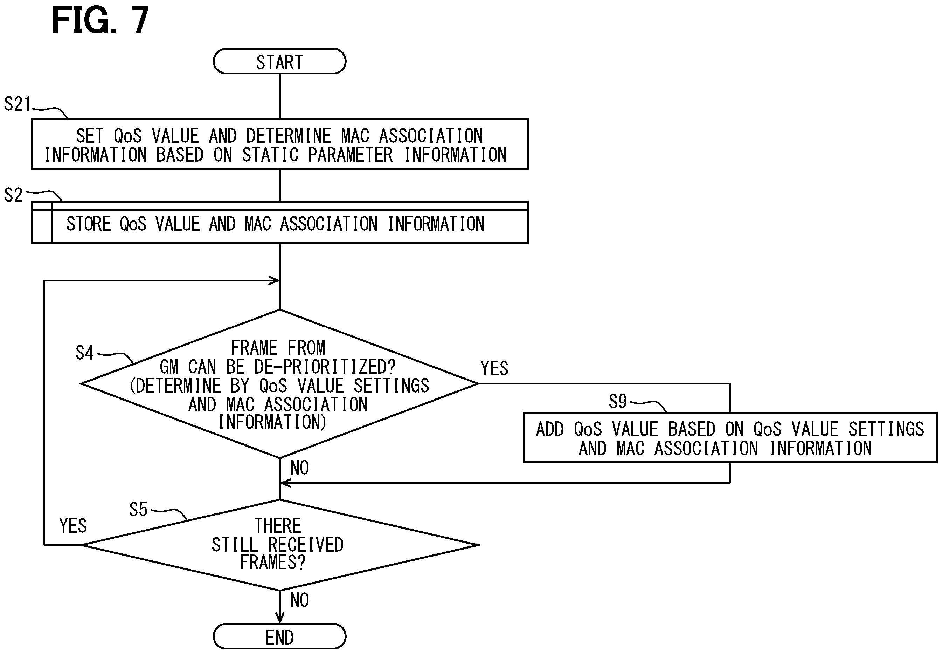

Hereinafter, the identical parts as those in the first embodiment will be designated by the same reference numerals, and explanations thereof will be omitted. Differences from the first embodiment will be described. As shown in FIG. 7, in the second embodiment, the relay device 5 statically sets the communication priority, unlike the method of dynamically setting it based on the information included in the announcement message as in the first embodiment. Here, "statically setting" means setting based solely on static parameter information. The static parameter information is pre-stored in a predetermined area, such as the memory of the relay device 5.

In step S21, which replaces step S1, the QoS value settings and the MAC association information are determined based on the static parameter information. Here, unlike step S1, the setting is always performed based on the static parameter information without any optionality such as "if necessary." Subsequently, steps S2, S4, and S5 are executed. That is, steps S3 and S6 to S8 in the flowchart of FIG. 4 of the first embodiment are deleted.

As described above, according to the second embodiment, the relay device 5 determines the QoS value settings and the MAC association information based on the static parameter information that is prepared in advance as system information of the communication network 6.

### (Other Embodiments)

Steps S11 and S12 may be reversed in order. The value subtracted from the CoS value in steps S14 and S15 may be changed as appropriate. The same value, for example, "1", may be subtracted from the CoS value in both steps S14 and S15. In steps S14 and S15, as long as the priority is lowered, methods other than subtracting the CoS value may be used. The current priority may be determined from the CoS value, and the process may be performed to achieve the CoS value of the lowered priority, or the priority may be directly instructed. The master does not necessarily have to comply with the communication protocol IEEE 802.1AS-2020, and the slave does not necessarily have to comply with the AUTOSAR communication protocol. Also, the switches do not necessarily have to comply with the communication protocol IEEE 802.1AS-2020.

The number of masters and slaves may be three or more. The switches 7, 8, 9, and 10 are not necessarily required, and the relay device 5 may be connected to multiple slaves 3 and 4. The master and the slave do not necessarily have to be electronic control units. These may also be applied to network systems other than in-vehicle communication systems. The priority does not necessarily have to be determined based on the grandmasterPriority and grandmasterClockQuality included in the announcement message. For example, it may be determined based on other information or parameters indicating the priority of the GM and the relative accuracy of the GM's clock. Also, the priority does not necessarily have to be set in the CoS field within the time synchronization communication frame.

While the present disclosure has been described with reference to embodiments thereof, it is to be understood that the disclosure is not limited to the embodiments and constructions. The present disclosure includes various modification examples and equivalents thereof. Furthermore, various combination and formation, and other combination and formation including one, more than one or less than one element may be made in the present disclosure.

Means and/or functions provided by each device or the like may be provided by software recorded in a tangible memory device and a computer that can execute the software, software only, hardware only, or some combination of them. For example, when the control device is provided by an electronic circuit that is hardware, it can be provided by a digital circuit including a large number of logic circuits, or an analog circuit.

The controllers (control units) and method described in the present disclosure may be implemented by a special purpose computer which is configured with a memory and a processor programmed to execute one or more particular functions embodied in computer programs of the memory. Alternatively, the control unit and the technique according to the present disclosure may be achieved by a dedicated computer provided by constituting a processor with one or more dedicated hardware logic circuits. Alternatively, the control unit and the technique according to the present disclosure may be achieved using one or more dedicated computers constituted by a combination of the processor and the memory programmed to execute one or more functions and the processor with one or more hardware logic circuits. The computer programs may be stored, as instructions to be executed by a computer, in a non-transitory tangible computer-readable storage medium.

## Claims

1. A relay device relaying communication between a plurality of masters (1, 2) and a plurality of slaves (3, 4) via a communication network (6), the relay device comprising:
a time synchronization support unit (11) configured to set a communication priority for a time synchronization communication frame transmitted from a master,
wherein
each of the plurality of masters has a clock accuracy required for a function of the master, and
the time synchronization support unit sets a lower communication priority for a time synchronization frame transmitted from a first master when the clock accuracy required for a function of the first master is lower than the clock accuracy required for a function of a second master.

2. The relay device according to claim 1, wherein
the time synchronization support unit determines a priority based on information or parameters indicating a priority order of a master included in the time synchronization communication frame and information or parameters indicating a relative accuracy of a clock of a master.

3. The relay device according to claim 1, wherein
a protocol of the communication network complies with IEEE 802.1p, and
the time synchronization support unit determines a priority based on grandmasterPriority and grandmasterClockQuality included in an announcement message within the time synchronization communication frame.

4. The relay device according to claim 3, wherein
the time synchronization support unit sets a priority in Class of Service (Cos) field within the time synchronization communication frame.

5. The relay device according to claim 1, wherein
information regarding the clock accuracy of each master is stored in advance in a predetermined area, and
the time synchronization support unit determines a priority based on the information stored in the predetermined area.

6. A communication network system comprising:
the relay device according to any one of claims 1 to 5;
the plurality of masters; and
the plurality of slaves.

7. A relay method relaying communication between a plurality of masters and a plurality of slaves via a communication network, the relay method comprising:
setting a communication priority for a time synchronization communication frame transmitted from a master,
wherein
each of the plurality of masters has a clock accuracy required for a function of the master, and
the setting sets a lower communication priority for a time synchronization frame transmitted from a first master when the clock accuracy required for a function of the first master is lower than the clock accuracy required for a function of a second master.

8. The relay method according to claim 7, wherein
a priority is determined based on information or parameters indicating a priority order of a master included in the time synchronization communication frame and information or parameters indicating a relative accuracy of a clock of a master.

9. The relay method according to claim 7, wherein
a protocol of the communication network complies with IEEE 802.1p, and
a priority is determined based on grandmasterPriority and grandmasterClockQuality included in an announcement message within the time synchronization communication frame.

10. The relay method according to claim 9, wherein
a priority is set in Class of Service (CoS) field within the time synchronization communication frame.

11. The relay method according to claim 9, wherein
information regarding the clock accuracy of each master is pre-stored in a predetermined area, and
a priority is determined based on the information stored in the predetermined area.

12. A computer program executed by a computer constituting a device relaying communication between a plurality of masters and a plurality of slaves via a communication network, the program causing a computer to:
set a communication priority for a time synchronization communication frame transmitted from a master,
wherein
each of the plurality of masters has a clock accuracy required for a function of the master, and
the setting sets a lower communication priority for a time synchronization frame transmitted from a first master when the clock accuracy required for a function of the first master is lower than the clock accuracy required for a function of a second master.

13. The computer program according to claim 12, wherein
a priority is determined based on information or parameters indicating a priority order of a master included in the time synchronization communication frame and information or parameters indicating a relative accuracy of a clock of a master.

14. The computer program according to claim 12, wherein
a protocol of the communication network complies with IEEE 802.1p, and
a priority is determined based on grandmasterPriority and grandmasterClockQuality included in an announcement message within the time synchronization communication frame.

15. The computer program according to claim 14, wherein
a priority is set in Class of Service (CoS) field within the time synchronization communication frame.

16. The computer program according to claim 12, wherein
information regarding the clock accuracy of each master is stored in advance in a predetermined area, and
a priority is determined based on the information stored in the predetermined area.
